(19) **Europäisches Patentamt**
**European Patent Office**
**Office européen des brevets**

(11) **EP 2 205 664 B1**

(12) **EUROPEAN PATENT SPECIFICATION**

(45) Date of publication and mention
of the grant of the patent:
**18.01.2012 Bulletin 2012/03**

(51) Int Cl.:
*C08J 5/18* (2006.01)  *C08L 33/08* (2006.01)
*C08L 33/10* (2006.01)  *C08L 33/14* (2006.01)

(21) Application number: **08840940.4**

(22) Date of filing: **21.10.2008**

(86) International application number:
**PCT/US2008/080628**

(87) International publication number:
**WO 2009/055378 (30.04.2009 Gazette 2009/18)**

(54) **(METH)ACRYLIC FILM AND MARKING FILM USING SAME**

(METH)ACRYLFOLIE UND MARKIERUNGSFOLIE UNTER VERWENDUNG DAVON

FILM (MÉTH)ACRYLIQUE ET FILM DE MARQUAGE L'UTILISANT

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **26.10.2007 JP 2007279299**

(43) Date of publication of application:
**14.07.2010 Bulletin 2010/28**

(73) Proprietor: **3M Innovative Properties Company**
**Saint Paul, MN 55133-3427 (US)**

(72) Inventors:
• **FURUSAWA, Masaaki**
**Tokyo 158-8583 (JP)**
• **ABE, Hidetoshi**
**Tokyo 158-8583 (JP)**

(74) Representative: **Vossius & Partner**
**Siebertstrasse 4**
**81675 München (DE)**

(56) References cited:
**WO-A1-2007/095136**  **JP-A- 2006 241 270**
**KR-A- 19980 064 409**  **KR-A- 20010 022 409**
**KR-A- 20050 110 041**  **KR-A- 20060 072 140**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>Field</u>

The present application relates to a (meth)acrylic film with excellent film strength at room temperature and conformability performance at low temperatures, as well as to a marking film that uses this (meth)acrylic film.

<u>Background</u>

Marking films, which have an adhesive layer on a film substrate, are used in such fields as advertising signs, wall coatings, building construction, and automotive, and the like. The film substrates that use these marking films have conventionally been vinyl chloride resins, but acrylic resins are under investigation as a substitute material. Acrylic resins have excellent weatherability and transparency, but are said to have inferior performance compared to vinyl chloride resins, and various methods have been proposed to improve this performance. For example, a method of using a multilayered acrylic resin to increase the strength towards impact has been disclosed in, for example, Japanese Patent Publication No. S60-17406; Japanese Patent Publication No. S60-30698; and Japanese Patent Application Laid-open No. 2002-309060.

Furthermore, the use of an acrylic resin with a molecular weight in a range between 500 and 2000 as a plasticizer for increasing dispersibility in a plastic sol where a fine thermoplastic resin is dispersed in plasticizer has been disclosed in Japanese Patent Application Laid-open No. 2001-247739.

Furthermore, Japanese Patent Application Laid-open No. 2006-124588 discloses a composition consisting of a stabilizer and a compound with a weighted average molecular weight of 50,000 or less containing an acrylic block copolymer with a functional group and another functional group that is reactive towards the first functional group.

Furthermore, a (meth)acrylic film comprising a (meth)acrylic polymer having a carboxyl group and a (meth) acrylic polymer having an amino group is disclosed in Japanese Patent Application Laid-open No.2005-105256 and Japanese Patent Application Laid-open No.2006-241270 as a film with high tension strength and elongation properties. Marking films which use acrylic resins are used indoors and outdoors in any season, and there have been problems where the film does not track a curved surface when applied to an object with a curved surface at low temperatures.

In order to increase the low temperature conformability properties of a marking film that has high film strength at room temperature, a method of reducing the glass transition temperature (Tg) of the resin that is used in the film is effective, but if the glass transition temperature (Tg) of the film is simply lowered, achieving a balance between the film strength at room temperature and the conformability properties at low temperature will be difficult. Furthermore, although the conformability properties at low temperature can be improved by adding a plasticizer, if the amount added is too high, the strength of the film at room temperature will be reduced, so achieving a balance with the conformability properties at low temperature is difficult.

Summary

The present application is directed to provide a (meth)acrylic film and a marking film with an excellent balance between film strength at room temperature and conformability properties at low temperature.

In one embodiment, the present application is a (meth)acrylic film containing a (meth)acrylic polymer containing a carboxyl group, a (meth)acrylic polymer containing an amino group, a polyacrylate with a weighted average molecular weight in a range between 1000 and 4000 and with a reactive functional group, and a cross-linking agent having a functional group that reacts with amino groups and carboxyl groups, wherein the amount of polyacrylate is in a range between 0.5 and 30 mass parts with regards to 100 mass parts of the sum of the (meth)acrylic polymer containing a carboxyl group and the (meth)acrylic polymer containing the amino group.

In another embodiment, the present application provides a marking film containing the (meth)acrylic film of the present application and an adhesive layer.

The (meth)acrylic film of the present application has an excellent balance between the film strength at room temperature and the conformability properties at low temperatures, and therefore has excellent work efficiency towards substrates with two-dimensional and three-dimensional curved surfaces. The film can be used indoors or outdoors regardless of the season. Furthermore, the film is a (meth)acrylic film, and therefore has excellent weatherability. Moreover, halogens are not included, so the film can be used as a non-vinyl chloride film that is a substitute for vinyl chloride resins.

<u>Brief Description of the Drawings</u>

Fig. 1 is a cross section diagram schematically showing the (meth)acrylic film of the present disclosure.
Fig. 2 is a cross section diagram schematically showing the (meth)acrylic film of the present disclosure.
Fig. 3 is a cross section diagram schematically showing the marking film of the present disclosure.
Fig. 4 is a cross section diagram schematically showing the corrugate plate for the working example.

Detailed Description

The (meth)acrylic film of the present application contains a (meth)acrylic polymer with a carboxyl group, a (meth)acrylic polymer with an amino group, a polyacrylate and a cross-linking agent. In this Specification, the term "(meth)acrylic" means either acrylic or methacrylic.

One method for obtaining the (meth)acrylic polymer with a carboxyl group is to copolymerize a monoethylenic unsaturated monomer and an unsaturated monomer containing a carboxyl group. One method for obtaining the (meth)acrylic polymer with an amino group is to copolymerize a monoethylenic unsaturated monomer and an unsaturated monomer containing an amino group. One method for obtained the aforementioned polyacrylate is to copolymerize a monoethylenic and an unsaturated monomer with a functional group.

In one embodiment the copolymerization is carried out by radical polymerization. Any known polymerization method can be used for this purpose, such as solution polymerization, suspension polymerization, emulsion polymerization, or block polymerization. As an initiator, benzoyl peroxide, lauroyl peroxide, bis(4-tert-butylcyclohexyl)peroxydicarbonate, or another such organic peroxide, or 2,2'azobisisobutyronitrile, 2,2'-azobis-2-methylbutyronitrile, 4,4'-azobis-4-cyanovalerianic acid, dimethyl 2,2'-azobis(2-methylpropionate), azobis-2,4-dimethylvaleronitrile (AVN), or other azo-based polymerization initiator can be used. The amount of initiator used is normally between 0.05 and 5 mass parts for 100 mass parts of the monomer mixture.

The monoethylenic unsaturated monomer is a main component of the polymer, and is generally expressed by the formula $CH_2=CR^1 COOR$ (where $R^1$ is a hydrogen or a methyl group, and R (bonded alkyl group) is a linear, cyclic, or branched alkyl group, or a phenyl group, alkoxyalkyl group, phenoxyalkyl group, or cyclic ether group). Examples of these monomers include methyl (meth)acrylate, ethyl (meth)acrylate, n-butyl (meth)acrylate, isoamyl (meth)acrylate, n-hexyl (meth)acrylate, 2-ethylhexyl (meth)acrylate, isooctyl (meth)acrylate, isononyl (meth)acrylate, decyl (meth)acrylate, dodecyl (meth)acrylate, cyclohexyl (meth)acrylate and other alkyl (meth)acrylates. Also, phenoxyethyl (meth)acrylate and other such phenoxyalkyl (meth)acrylates, methoxypropyl (meth)acrylate, 2-methoxybutyl (meth)acrylate, and other such alkoxyalkyl (meth)acrylates, glycidyl (meth)acrylate, tetrahydrofurfuryl (meth)acrylate, and other such (meth)acrylates containing a cyclic ether, and the like can be used. Depending on the objective, one, or two or more monoethylenic unsaturated monomers can be used in order to achieve the desired properties.

Examples of the unsaturated monomer with a carboxyl group include unsaturated monocarboxylic acids (such as acrylic acid and methacrylic acid and so forth), unsaturated dicarboxylic acids (such as maleic acid, itaconic acid, and so forth), ω-carboxypolycaprolactone monoacrylate, phthalic acid monohydroxyethyl (meth)acrylate, β-carboxyethyl acrylate, 2-(meth)acryloyloxyethyl succinic acid, and 2-(meth)acryloyloxyethyl hexahydrophthalic acid.

Examples of unsaturated monomers that contain an amino group include N,N-dimethylaminoethyl acrylate, N,N-dimethylaminoethyl methacrylate, and other such dialkylaminoalkyl (meth)acrylates, N,N-dimethylaminopropyl acrylamide, N,N-dimethylaminopropyl methacrylamide, and other such dialkylaminoalkyl (meth)acrylamide, N,N- dimethylaminoethyl vinyl ether, N,N-diethylaminoethyl vinyl ether, and other such dialkylaminoalkyl vinyl ethers, as well as blends thereof. Examples of other unsaturated monomers that contain an amino group include vinyl pyridine, vinyl imidazole, and other monomers with tertiary amino groups represented by nitrogen containing vinyl monomers with heterocyclic rings, and styrene with a tertiary amino group (such as 4-(N,N-dimethylamino)-styrene, and 4-(N,N-diethylamino)-styrene and the like). In one embodiment unsaturated monomers containing a tertiary amino group are used.

In one embodiment the (meth)acrylic polymer containing a carboxyl group and the (meth)acrylic polymer containing an amino group are obtained by specifically copolymerizing between 0.5 and 20 mass parts of an unsaturated monomer containing a carboxyl group or an amino group with between 80 and 95.5 mass parts of a monoethylenic unsaturated monomer as the main component. If the amount of unsaturated monomer containing a carboxyl group or an amino group is too low, there is a possibility of poor miscibility with the other (meth)acrylic polymer containing an amino group or a carboxyl group.

In addition to the above, the (meth)acrylic polymer can also be copolymerized with other monomers including aromatic vinyl monomers (such as styrene, α-methyl styrene, vinyl toluene, and the like), vinyl esters (such as vinyl acetate and the like), 2-hydroxyethyl (meth)acrylate, 2-hydroxypropyl (meth)acrylate, 4-hydroxybutyl (meth)acrylate, and 1,4-cyclohexyldiamethanol monoacrylate, and other hydroxyalkyl (meth)acrylates, to the extent that the effect of the present application is not hindered.

With the (meth)acrylic resin film of the present application, if the glass transition temperature (Tg) of the carboxyl group-containing (meth)acrylic polymer is 0°C or higher, the Tg of the (meth)acrylic polymer containing an amino group is 0°C or lower. In another embodiment when the Tg of the former is 0°C or lower, the Tg of the latter is 0°C or higher.

This principle is not absolute, but a (meth)acrylic polymer with a high Tg gives the film a high tensile strength, and a (meth)acrylic polymer with a low Tg gives the film good elongation characteristics at low temperatures, and therefore a (meth)acrylic film with excellent toughness, and an excellent balance between tensile strength and elongation properties can be obtained. A (meth)acrylic polymer with a Tg of 0°C or higher can be obtained by copolymerizing a monoethylenic unsaturated monomer with a Tg of 0°C or higher as a main component with a homopolymer obtained by polymerizing a monomer such as methyl methacrylate or n-butyl methacrylate or the like. Also, a (meth)acrylic polymer with a Tg of 0°C or lower can be easily obtained by copolymerizing as the main component a homopolymer having a Tg of 0°C or lower, such as ethyl acrylate, n-butyl acrylate, or 2-ethylhexyl acrylate.

The weighted average molecular weight of these polymers is selected by considering the various properties of the (meth)acrylic film made from the polymer. In one embodiment the weighted average molecular weight is usually at least 10,000; in another embodiment it is at least 50,000; and in another embodiment it is at least 100,000. If the weighted average molecular weight is too high, the viscosity of the polymer will l increase, and fabrication of the film will be difficult. On the other hand, if the weighted average molecular weight is too low, the tensile strength, elongation rate, and weatherability and the like of the film will be negatively affected.

A polyacrylate with a weighted average molecular weight including the reactive functional group in a range between 1000 and 4000 can be obtained by copolymerizing a monoethylenic unsaturated monomer and an unsaturated monomer containing a functional group. In one embodiment this monoethylenic unsaturated monomer is a monomer with the same number of carbons as the number of carbons in the bonded alkyl group (R) of the monoethylenic unsaturated monomer that is used in the polymerization of the (meth)acrylic polymer containing a carboxyl group or the (meth)acrylic polymer containing an amino group. The R of the polyacrylate, (meth)acrylic polymer containing a carboxyl group, and (meth)acrylic polymer containing an amino group is not restricted to a single type, and a plurality of different types of R can be used to compose a single polymer, but in this case, the R of the monomer with the highest composition ratio of the monomers which compose polyacrylate has the same number of carbons as the R of at least one of the (meth)acrylic polymer containing a carboxyl group and a (meth)acrylic polymer containing an amino group.

Examples of the unsaturated monomer containing a functional group include hydroxyalkyl (meth)acrylate (for example 2-hydroxyethyl (meth)acrylate, 3-hydroxypropyl (meth)acrylate, 2-hydroxypropyl (meth)acrylate, and 4-hydroxybutyl (meth)acrylate and the like), unsaturated monocarboxylic acids (such as acrylic acid and methacrylic acid and so forth), unsaturated dicarboxylic acids (such as maleic acid, itaconic acid, and so forth), ω-carboxypolycaprolactone monoacrylate, phthalic acid monohydroxyethyl (meth)acrylate, β-carboxyethyl acrylate, 2-(meth)acryloyloxyethyl succinic acid, and 2-(meth)acryloyloxyethyl hexahydrophthalic acid.

In some embodiments unsaturated monomers with a hydroxyl group (OH group) are used. This is in order to minimize tearing of the marking film during applying and peeling for the case where reapplying the film is necessary when applying a marking film to a curved substrate at low temperatures because application in the desired position was not possible.

In some embodiments a polyacrylate film having a functional group only at the terminus of the molecule (such as "Actflow UMB-1001", product of Soken Chemical & Engineering, and the like) is used. This is because the impact resistance of the marking film is thought to be improved.

The cross-linking agent is not restricted to the following, but specific examples include bisamide based crosslinking agents (such as 1,1'-isophthaloyl-bis(2-methylaziridine)), aziridine based crosslinking agents (such as "Chemitite PZ33" product of Nippon Shokubai, or "NeoCryl CX-100", product of Avecia), carbodiimide based crosslinking agents (such as "Carbodilite V-03, V-05, or V-07", products of Nisshinbo), epoxy based crosslinking agents (such as "E-AX, E-5XM, or E5C", products of Soken Chemical and Engineering), and isocyanate based crosslinking agents (such as "Coronate L or Coronate HK", products of Nippon Polyurethane, or "Desmodur H, Desmodur W, or Desmodur I", product of Bayer).

The (meth)acrylic film of the present disclosure can be fabricated by blending at least one type of the aforementioned (meth)acrylic polymer with a carboxyl group, at least one type of the aforementioned (meth)acrylic polymer with an amino group, at least one type of the aforementioned polyacrylate, and a cross-linking agent using a conventionally known method, and then fabricating the film using a standard film forming method. More specifically, a film can be fabricated, for example, by mixing solutions of these polymers, adding toluene, ethyl acetate, or another such volatile solvent if necessary to adjust the viscosity, coating the release surface of a peeling liner, and removing the volatile solvents of the polymer solutions by drying. Any ordinary coater can be used for this coating apparatus, such as a bar coater, knife coater, roll coater, or die coater. This film can also be fabricated by melt extrusion molding.

Fabricating the (meth)acrylic film, a film having the desired tensile strength and elongation characteristics can be obtained by varying the ratios in which the (meth)acrylic polymers are blended. More specifically, in some embodiments the blend ratio (mass ratio) of the (meth)acrylic polymer with a Tg higher than 0°C and the polymer with a Tg lower than 0°C is between 10:90 and 90:10; in other embodiments it is between 20:80 and 90:10; in further embodiments it is between 30:70 and 90:10; and in yet additional embodiments it is between 50:50 and 90:10.

The blending ratio (mass ratio) of the aforementioned polyacrylate is preferably between 0.5 and 30 mass parts for 100 mass parts of the total of the (meth)acrylic polymer containing a carboxyl group and the (meth)acrylic polymer containing an amino group. If over 30 mass parts are added, the film strength of the (meth)acrylic film at room temperature will be low.

One or more types of conventionally known additives such as antioxidants, ultraviolet light absorbers, photostabilizers, plasticizers, slip additives, antistatic agents, flame retardants, and fillers and the like can be added to the (meth)acrylic film of the present application to the extent that the effect of the present application is not hindered.

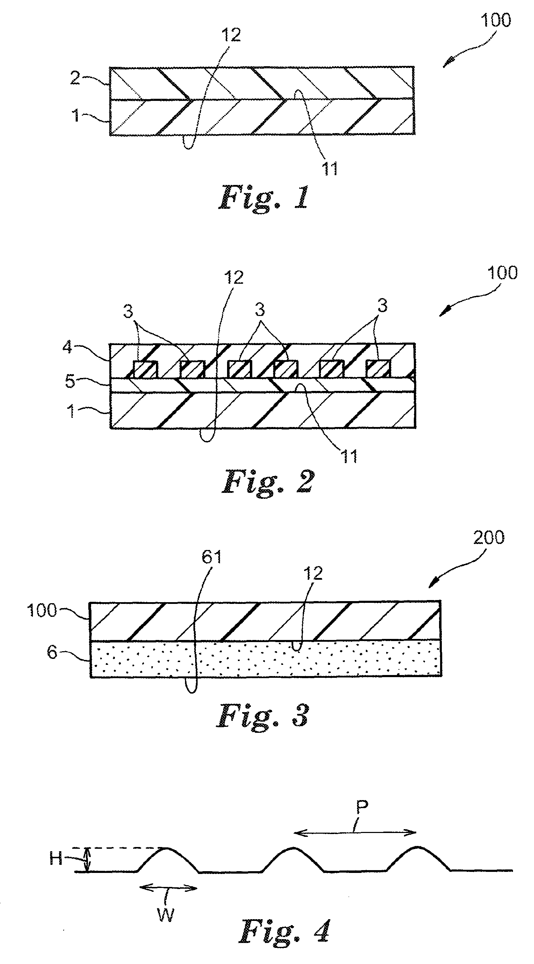

An example of the construction of the (meth)acrylic film of the present application will be described while referencing FIG. 1.

The (meth)acrylic film 100 can be constructed of two or more layers of (meth)acrylic film. In this case, the first (meth)acrylic film layer 1 has a first primary surface 11 and a second primary surface 12, and the second (meth)acrylic film layer 2 is overlaid on the first primary surface 11. For example, if the first (meth)acrylic film surface 1 is white, a second (meth)acrylic film layer 2 colored with a different color can be laminated onto the first primary surface.

As shown in Fig. 2, a colorant 3 can be applied to the first primary surface 11 in place of the second (meth) acrylic film layer 2. Furthermore, the colorant can be applied to the first primary surface after applying the second (meth) acrylic film layer. This colorant is usually a toner or ink. A single colorant or a plurality of colorants form an image layer. Either case is performed either continuously or non-continuously for providing information or decoration or the like. The colorant that makes the image layer is applied to the (meth)acrylic film by an arbitrary printing method or coloring method. For example, these methods include a solvent based inkjet ink printing method, an electrostatic recording toner printing method, and a silk screen printing method, and the like.

A protective layer 4 can be formed in order to protect the surface of the (meth)acrylic film and to prevent loss of colorant. The protective layer 4 is preferably a resin with high transparency. For example, a fluororesin, a phthalate polyester (PET, PEN, and so forth), an acrylic resin, or a petroleum resistant resin can be used. In some embodiments the thickness of the protective layer is between 5 and 120 $\mu$m; in other embodiments it is between 10 and 100 $\mu$m. Overall, the protective layer 4 is light transmissive. In some embodiments the optical transmissivity is usually at least 60%; in other embodiments it is at least 70%; and in other embodiments it is at least 80%. The term "optical transmissivity" as used herein refers to the total optical transmissivity as measured by a spectrophotometer, or by a color meter which also serves as a photometer, using light with a wavelength of 550 nm.

Furthermore, a receptor layer 5 can be provided to the first primary surface 11 of the (meth)acrylic film layer 1 to increase adhesion between the colorant 3 and the (meth)acrylic colorant film layer 1. There are no particular restrictions on the resin used to form the receptor layer 5, but an acrylic polymer, polyolefin, polyvinyl acetal, phenoxy resin, or the like can be used. In one embodiment the glass transition point of the resin that forms the receptor layer is between 0 and 100°C.

The thickness of the (meth)acrylic film of the present disclosure is not particularly restricted; in one embodiment it is in a range between approximately 1 and 1000 $\mu$m; in other embodiments it is in a range between approximately 5 and 500 $\mu$m; and in further embodiments it is in a range between approximately 20 and 200 $\mu$m, including the afore-mentioned second (meth)acrylic film layer, protective layer, and receptor layer and the like. If the film is too thin, the film strength will be so low that the film may be damaged when applied to a substrate and then peeled off. On the other hand, the flexibility of the film may suffer if the film is too thick.

Marking Film

An example of the marking film 200 using the (meth)acrylate film of the present disclosure will be described while referencing FIG. 3.

An adhesive layer 6 is arranged fixedly to the second primary surface 12 of the (meth)acrylic film 100 that forms the marking film 200. The adhesive layer usually forms a flat adhesive surface, but may instead form an uneven adhesive surface. This uneven adhesive surface comprises protrusions containing an adhesive and recesses surrounding these protrusions, which are formed on the adhesive side 61 of the adhesive layer 6, and includes an adhesive side, on which communication paths communicating with the outside defined by the recesses are formed, between the adhesive side 61 and the substrate surface in a state in which the film has been bonded to a substrate. The adhesive agent on the adhesive layer 6 is not particularly restricted, and in some embodiments can be a pressure sensitive adhesive or a heat sensitive adhesive.

Examples of pressure-sensitive adhesive layers that use a pressure sensitive adhesive that can be used favorably include a single-layered pressure-sensitive adhesive film containing a pressure-sensitive polymer, and a double-sided adhesive sheet having two pressure-sensitive adhesive layers on both sides of the substrate. A favorable pressure sensitive adhesive will contain a pressure-sensitive polymer and a crosslinking agent that crosslinks the pressure-sensitive polymer. The term "pressure-sensitive polymer" used in this Specification is a polymer that exhibits pressure-sensitive adhesion at normal temperature (about 25°C). An acrylic polymer, polyurethane, polyolefin, polyester, or the like can be used as this pressure-sensitive polymer.

The marking film 200 can also be obtained by applying a coating solution containing an adhesive to a peeling surface of a liner, and drying to form an adhesive layer with liner, and this adhesive layer with liner is overlaid onto the second primary surface 12 of the (meth)acrylic film 100, and then peeling the liner. In some embodiments the thickness of the marking film is usually between 30 and 1500 μm; and in other embodiments it is between 50 and 950 μm.

As described above, the (meth)acrylic film 100 that makes up the masking film 200 can be made up of two or more (meth)acrylic film layers, a colorant applied to the first primary surface, and the film can also have a protective layer and a receptor layer.

The tensile elasticity of the marking film of the present disclosure at room temperature (20°C) is preferably 160 MPa or higher. At lower levels, there will be problems with the marking film easily breaking when applied to the substrate.

Examples

The present disclosure is described below in further detail by presenting examples and comparative examples. The following abbreviations are used in this specification.

MA: methyl acrylate
MMA: methyl methacrylate
BA: butyl acrylate
BMA: butyl methacrylate
iBMA: isobutyl methacrylate
IOA: isooctyl acrylate
DEMAEMA: dimethylaminoethyl methacrylate
AA: acrylic acid
MAA: methyl methacrylic acid
HEA: hydroxyethyl acrylate

The (meth)acrylic polymers used with the working examples and the comparative examples or produced by the following procedures.

Polymer 1: MMA, BMA, and DEMAEMA were copolymerized in an ethyl acetate solution at a composition ratio of 60:34:6 (mass ratio). The weighted average molecular weight (Mw) of the polymer obtained was 68,000, the glass transition temperature (Tg) was 63°C, and the solid content was 39%.

Polymer 2: BA, AA, and HEA were polymerized in a toluene/ethyl acetate solvent blend at a composition ratio of 96:4:0.5 (mass ratio). The Mw of the polymer obtained was 580,000, the Tg was -50°C, and the solid content was 42%.

Polymer 3: BA and AA were copolymerized in a toluene/ethyl acetate solvent blend at a composition ratio of 94:6 (mass ratio). The Mw of the polymer obtained was 760,000, the Tg was -48°C, and the solid content was 33%.

Polymer 4: BA and DEMAEMA were copolymerized in an ethyl acetate solution at a composition ratio of 90: 10 (mass ratio). The Mw of the polymer obtained was 23,000, the Tg was -48°C, and the solid content was 50%.

Polymer 5: iBMA, MMA, and MAA were copolymerized in a toluene/isopropyl alcohol solvent blend at a composition ratio of 48.6:47.3:4.1 (mass ratio). The Mw of the polymer obtained was 52,000, the Tg was 59°C, and the solid content was 38.5%.

Glass Transition Point

Unless otherwise specifically noted, the glass transition point of the polymer shown in this specification is the value determined by the following FOX equation where the polymer is copolymerized from n number of monomer types.

$$1/Tg = X1/(Tg1 + 273.15) + X2/(Tg2 + 273.15) + \cdots + Xn/(Tgn + 273.15)$$

Tg 1: Glass transition point of component 1 homopolymer
Tg 2: Glass transition point of component 2 homopolymer
X1: Weight ratio of component I monomer during polymerization
X2: Weight ratio of component 2 monomer during polymerization

$$X1 + X2 + \cdots + Xn = 1$$

Weighted Average Molecular Weight

Unless otherwise stated, the term "weight average molecular weight" of the polymer shown in this specification means the molecular weight as measured according to gel permeation chromatography (GPC), in terms of styrene.

(Polyacrylate)

The following polyacrylate was used in the working examples and comparative examples. Note, in this specification, straight chain refers to a polyacrylate that has a functional group such as an OH group or a carboxyl group only at the end of the molecular chain, and branched refers to a polyacrylate that contains a functional group on a side chain.

Polyacrylate 1: Copolymer of "ActFlow UMB1001 ", product of Soken Chemical and Engineering, with BA monomer having a straight chain OH group; weighted average molecular weight (Mw) was 1500, and the Tg was -54°C.

Polyacrylate 2: Copolymer of "ActFlow UMB2005", product of Soken Chemical and Engineering, with BA monomer having a branched chain OH group; weighted average molecular weight (Mw) was 2200, and the Tg was -54°C.

Polyacrylate 3: Copolymer of "ActFlow CBB3098", product of Soken Chemical and Engineering, with BA monomer having a branched chain carboxyl group; weighted average molecular weight (Mw) was 3000, and the Tg was -44°C.

Example 1

A protective layer resin solution was prepared by blending an acrylic polyol resin ("Desmonphen A365", product of Sumitomo Bayer Urethane) and an HDI isocyanate ("Sumidur N3300", product of Sumitomo Bayer Urethane) added a isocyanate group to hydroxide group equivalent ratio of 1.0 ([NCO]/[OH] equivalent ratio = 1.0). This resin solution was applied by a knife coater to a peeled polyester film with a thickness of 50 $\mu$m, and then dried for 5 minutes at 85°C to produce a protective layer with a thickness of 3 $\mu$m.

Next, a (meth)acrylic film resins solutions were prepared at the formulation ratios shown in Table 1, 7 mass parts of red dye ("IRGAZIN DPP RED BO", product of CIBA Specialty Chemicals) was added, and then an epoxy based cross-linking agent ("E-AX", product of Soken Chemical and Engineering) was added to make 1.25 mass parts for 100 mass parts of polymer 2. This solution was applied to the aforementioned protective layer surface using a knife coater, and then dried for 5 minutes at 90°C to make a (meth)acrylic film (second (meth)acrylic film) layer with a dried film thickness of 30 $\mu$m. Furthermore, a (meth)acrylic film (first (meth)acrylic film) layer with a thickness of 30 $\mu$m was fabricated on the surface of the aforementioned second (meth)acrylate film layer by the same procedures except that 50 mass parts of titanium oxide ("TiPure R960", product of DuPont) was used in place of the red dye of the aforementioned (meth)acrylic film resin solution in order to obtain a two layer construction (meth)acrylic film.

An acrylic adhesive (Mw of 360,000, Tg of -7°C) consisting of an IOA/MA/AA copolymer with a formulation ratio of 70:22.5:7.5 (mass ratio) was prepared, and 1.7 mass parts (solid content ratio) of 1,1'-isophthalyol-bis(2-methylaziridine) was added to 100 mass parts of this acrylic adhesive to make a pressure sensitive adhesive composition. A knife coater was used to apply this adhesive composition to a paper-based double-sided polyethylene laminate release sheet such that the thickness after drying would be approximately 30 $\mu$m, and this coating was dried for 5 minutes in a 90°C oven to obtain a pressure-sensitive adhesive layer. This adhesive layer was dry laminated onto the surface of the aforementioned first (meth)acrylic film layer to obtain a marking film.

Examples 2 through 9 and Comparative Examples 1 through 3

A (meth)acrylic film and a masking film were obtained as described for working example 1, with the exception that the formulation ratios and types of the (meth)acrylic film resin solution was modified as shown in Table 1.

Working Examples 10, 11 and Comparative Example 4

A (meth)acrylic film resins solutions were prepared at the formulation ratios shown in Table 1, and then an epoxy based cross-linking agent ("E-AX", product of Soken Chemical and Engineering) was added to make 1.25 mass parts for 100 mass parts of polymer 3. This solution was applied to a peeled polyester film with a thickness of 50 $\mu$m, and then dried at 90°C for 10 minutes to obtain a (meth)acrylate film with a dried thickness of 50 $\mu$m. After producing the adhesive layer in a manner similar to working example 1, this adhesive layer was laminated onto the aforementioned (meth)acrylic film to obtain a marking film.

[TABLE 1] Formulation Ratio

| | (Meth)acrylic Polymer (A) | (Meth)acrylic Polymer (B) | Polyacrylate (C) | Formulation Ratio (solid Content Ratio) A:B:C |
|---|---|---|---|---|
| Example 1 | Polymer 1 | Polymer 2 | Polyacrylate 1 | 100:95:5 |
| Example 2 | Polymer 1 | Polymer 2 | Polyacrylate 1 | 100:90:10 |
| Example 3 | Polymer 1 | Polymer 2 | Polyacrylate 1 | 100:80:20 |
| Example 4 | Polymer 1 | Polymer 2 | Polyacrylate 1 | 100:70:30 |
| Example 5 | Polymer 1 | Polymer 2 | Polyacrylate 1 | 100:80:10 |
| Example 6 | Polymer 1 | Polymer 3 | Polyacrylate 1 | 100:70:10 |
| Example 7 | Polymer 1 | Polymer 2 | Polyacrylate 2 | 100:80:20 |
| Example 8 | Polymer 4 | Polymer 5 | Polyacrylate 1 | 100:80:10 |
| Example 9 | Polymer 1 | Polymer 2 | Polyacrylate 3 | 100:80:10 |
| Example 10 | Polymer 1 | Polymer 3 | Polyacrylate 1 | 100:55:10 |
| Example 11 | Polymer 1 | Polymer 3 | Polyacrylate 1 | 100:50:20 |
| Comparative Example 1 | Polymer 1 | Polymer 2 | - | 100:90:0 |
| Comparative Example 2 | Polymer 1 | Polymer 2 | - | 100:120:0 |
| Comparative Example 3 | Polymer 1 | Polymer 2 | Polyacrylate 1 | 100:50:50 |
| Comparative Example 4 | Polymer 1 | Polymer 3 | - | 100:70:0 |

The marking films obtained by the working examples and the comparative examples are measured for conformability performance at low temperature, film strength at room temperature, re-applicability at low temperature, and impact resistance, and the miscibility of the (meth)acrylic film resin solution was measured. The measurement methods were as shown below. The results are shown in Table 2.

Conformability Properties at Low Temperature

An aluminum corrugate plate (peak height(H): 5 mm, peak width(W):20 mm, peak pitch(P):45 mm) with the shape shown in Fig. 4 was prepared as the substrate. The masking film was cut into 100 mm long x 50 mm wide test pieces, cured for 24 hours in a 5°C environment, and then applied by pressing on to the peaks and valleys of the corrugate plate with a squeegee. If tearing did not occur when pressing into the peaks and valleys, an evaluation of "Good" was made, but if tearing did occur while being pressed, an evaluation of "Poor" was made.

Film Strength at Room Temperature

The tensile elasticity of the marking film was measured under the following conditions in conformance with the method specified by JISK7127 (1989).
Measurement temperature: 20°C
Test piece shape: #1 shape (width 25 mm)
Tensile speed: 300 mm/minute

Re-applicability at Low Temperature

After the conformability test at low temperature, a test piece was reapplied and the appearance when peeling from the edges was confirmed. If cracks did not occur in the test piece during peeling, an evaluation of "Good" was made, but if cracks occurred during peeling, an evaluation of "Poor" was made.

Impact Resistance

A 150 mm long x 70 mm wide test piece was applied to a 150 mm long x 70 mm wide x 1 mm thick aluminum plate and allowed to cure for 24 hours in a 20°C environment. Next, an impact was applied from the back side of the test piece application surface using a Gardener Impact Tester in conformance with ASTM D5420-04, and then evaluated. A 1 pound weight was dropped from a gradually increased height, and after the test, the impact resistance was evaluated by confirming that there were no cracks or tearing on the surface of the test piece. The units for the impact resistance were converted to mm·kg after calculating the height (inches) x weight (pounds).

Miscibility of (Meth)acrylic Film Resin Solutions

The (meth)acrylic film resin solution was mixed for 10 minutes at 900 rpm using a homomixer ("T. K. Auto Homomixer", product of PRIMIX Corp.), and after sitting for 30 minutes, the appearance was visually observed. If the components are miscible and formed a transparent solution, an evaluation of "Good" was made, but if the solution was not transparent, an evaluation of "Poor" was made.

[Table 2]

|  | Conformability Properties at Low Temperature | Film Strength at Room Temperature (Mpa) | Reapplicability at Low Temperatures | Impact Resistance (mm·kg) | Solution Condition |
|---|---|---|---|---|---|
| Example 1 | Good | 237.6 | Good | 908 | Good |
| Example 2 | Good | 257.3 | Good | 908 | Good |
| Example 3 | Good | 187.0 | Good | 908 | Good |
| Example 4 | Good | 178.4 | Good | 908 | Good |
| Example 5 | Good | 300.2 | Good | 454 | Good |
| Example 6 | Good | 205.0 | Good | 568 | Good |
| Example 7 | Good | 210.1 | Good | 0 | Poor |
| Example 8 | Good | 302.0 | Good | 681 | Good |
| Example 9 | Good | 312.4 | Poor | 0 | Good |
| Example 10 | Good | 258.4 | Good | 454 | Good |
| Example 11 | Good | 176.0 | Good | 568 | Good |
| Comparative Example 1 | Poor | 336.2 | Poor | 114 | Good |
| Comparative Example 2 | Good | 135.9 | Poor | 908 | Good |
| Comparative Example 3 | Good | 103.0 | Good | 0 | Good |
| Comparative Example 4 | Poor | 294.2 | Poor | 114 | Good |

**Claims**

**1.**  A (meth)acrylic film comprising:

a (meth)acrylic polymer containing a carboxyl group;
a (meth)acrylic polymer containing an amino group;
a polyacrylate with a weighted average molecular weight in a range of between 1000 and 4000 and with a reactive functional group; and

a cross-linking agent having a functional group that reacts with amino groups and carboxyl groups, wherein the amount of polyacrylate is in a range between 0.5 and 30 mass parts with regards to 100 mass parts of the sum of the (meth)acrylic polymer containing a carboxyl group and the (meth)acrylic polymer containing the amino group.

2. The (meth)acrylic film according to Claim 1, wherein said reactive functional group is a hydroxyl group.

3. The (meth)acrylic film according to Claim 1 or Claim 2, wherein said polyacrylate has a functional group only at the end of the molecule.

4. The (meth)acrylic film according to any of Claims 1 through Claim 3, wherein the number of carbons of the bonded alkyl group (R) of said polyacrylate is the same as the number of carbons of the bonded alkyl group (R) of either the (meth)acrylate polymer containing a carboxyl group or the (meth)acrylate polymer containing an amino group.

5. The (meth)acrylic film according to any of Claims 1 through 4, wherein a pigment or a dye is dispersed.

6. The (meth)acrylic film according to any of Claims 1 through 5, having a first primary surface and a second primary surface, wherein a protective layer is formed on said first primary surface.

7. The (meth)acrylic film according to any of Claims 1 through 6, wherein the glass transition temperature of the (meth)acrylic polymer containing a carboxyl group is 0°C or higher, and the glass transition temperature of the (meth)acrylic polymer containing an amino group is 0°C or lower.

8. The (meth)acrylic film according to any of Claims 1 through 6, wherein the glass transition temperature of the (meth)acrylic polymer containing a carboxyl group is 0°C or lower, and the glass transition temperature of the (meth)acrylic polymer containing an amino group is 0°C or higher.

9. A marking film comprising the (meth)acrylic film according to any of Claims 1 through 5, having a first primary surface and a second primary surface; and an adhesive layer provided on the second primary surface.

**Patentansprüche**

1. (Meth)acrylfolie, umfassend:

ein (Meth)acrylpolymer mit einer Carboxylgruppe;
ein (Meth)acrylpolymer mit einer Aminogruppe;
ein Polyacrylat mit einem gewichtsmittleren Molekulargewicht im Bereich zwischen 1000 und 4000 und mit einer reaktiven funktionellen Gruppe und
einen Vernetzer mit einer funktionellen Gruppe, die mit Aminogruppen und Carboxylgruppen reagiert, wobei die Polyacrylatmenge im Bereich zwischen 0,5 und 30 Massenteilen, bezogen auf 100 Massenteile der Summe des (Meth)acrylpolymers mit einer Carboxylgruppe und des (Meth)acrylpolymers mit der Aminogruppe, liegt.

2. (Meth)acrylfolie nach Anspruch 1, wobei es sich bei der reaktiven funktionellen Gruppe um eine Hydroxylgruppe handelt.

3. (Meth)acrylfolie nach Anspruch 1 oder Anspruch 2, wobei das Polyacrylat nur am Ende des Moleküls eine funktionelle Gruppe aufweist.

4. (Meth)acrylfolie nach einem der Ansprüche 1 bis Anspruch 3, wobei die Zahl der Kohlenstoffatome der gebundenen Alkylgruppe (R) des Polyacrylats gleich der Zahl der Kohlenstoffatome der gebundenen Alkylgruppe (R) entweder des (Meth)acrylpolymers mit einer Carboxylgruppe oder des (Meth)acrylpolymers mit einer Aminogruppe ist.

5. (Meth)acrylfolie nach einem der Ansprüche 1 bis 4, in der ein Pigment oder ein Farbstoff dispergiert ist.

6. (Meth)acrylfolie nach einem der Ansprüche 1 bis 5 mit einer ersten primären Oberfläche und einer zweiten primären Oberfläche, wobei auf der ersten primären Oberfläche eine Schutzschicht ausgebildet ist.

**7.** (Meth)acrylfolie nach einem der Ansprüche 1 bis 6, wobei die Glasübergangstemperatur des (Meth)acrylpolymers mit einer Carboxylgruppe 0°C oder mehr beträgt und die Glasübergangstemperatur des (Meth)acrylpolymers mit einer Aminogruppe 0°C oder weniger beträgt.

**8.** (Meth)acrylfolie nach einem der Ansprüche 1 bis 6, wobei die Glasübergangstemperatur des (Meth)acrylpolymers mit einer Carboxylgruppe 0°C oder weniger beträgt und die Glasübergangstemperatur des (Meth)acrylpolymers mit einer Aminogruppe 0°C oder mehr beträgt.

**9.** Markierungsfolie, umfassend die (Meth)acrylfolie nach einem der Ansprüche 1 bis 5 mit einer ersten primären Oberfläche und einer zweiten primären Oberfläche, und eine auf der zweiten primären Oberfläche bereitgestellte Klebstoffschicht.

**Revendications**

**1.** Film (méth)acrylique comprenant :

un polymère (méth)acrylique contenant un groupe carboxyle ;
un polymère (méth)acrylique contenant un groupe amino ;
un polyacrylate ayant une masse moléculaire moyenne en poids de 1 000 à 4 000 et comportant un groupe fonctionnel réactif ; et
un agent de réticulation comportant un groupe fonctionnel qui réagit avec les groupes amino et les groupes carboxyle, dans lequel
la quantité de polyacrylate est de 0,5 à 30 parties massiques relativement à 100 parties massiques de la somme du polymère (méth)acrylique contenant un groupe carboxyle et du polymère (méth)acrylique contenant le groupe amino.

**2.** Film (méth)acrylique selon la revendication 1, dans lequel ledit groupe fonctionnel réactif est un groupe hydroxyle.

**3.** Film (méth)acrylique selon la revendication 1 ou la revendication 2, dans lequel ledit polyacrylate comporte un groupe fonctionnel uniquement à l'extrémité de la molécule.

**4.** Film (méth)acrylique selon l'une quelconque des revendications 1 à 3, dans lequel le nombre d'atomes de carbone du groupe alkyle lié (R) dudit polyacrylate est identique au nombre d'atomes de carbone du groupe alkyle lié (R) soit du polymère (méth)acrylique contenant un groupe carboxyle, soit du polymère (méth)acrylique contenant un groupe amino.

**5.** Film (méth)acrylique selon l'une quelconque des revendications 1 à 4, dans lequel un pigment ou un colorant est dispersé.

**6.** Film (méth)acrylique selon l'une quelconque des revendications 1 à 5, comportant une première surface primaire et une deuxième surface primaire, une couche de protection étant formée sur ladite première surface primaire.

**7.** Film (méth)acrylique selon l'une quelconque des revendications 1 à 6, dans lequel la température de transition vitreuse du polymère (méth)acrylique contenant un groupe carboxyle est de 0 °C ou plus, et la température de transition vitreuse du polymère (méth)acrylique contenant un groupe amino est de 0 °C ou moins.

**8.** Film (méth)acrylique selon l'une quelconque des revendications 1 à 6, dans lequel la température de transition vitreuse du polymère (méth)acrylique contenant un groupe carboxyle est de 0 °C ou moins, et la température de transition vitreuse du polymère (méth)acrylique contenant un groupe amino est de 0 °C ou plus.

**9.** Film de marquage comprenant le film (méth)acrylique selon l'une quelconque des revendications 1 à 5, comportant une première surface primaire et une deuxième surface primaire, et une couche adhésive formée sur la deuxième surface primaire.

Fig. 1

Fig. 2

Fig. 3

Fig. 4

**EP 2 205 664 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP S6017406 B
- JP S6030698 B
- JP 2002309060 A
- JP 2001247739 A
- JP 2006124588 A
- JP 2005105256 A
- JP 2006241270 A